# EUROPÄISCHE PATENTSCHRIFT

(11) **EP 1 215 062 B1**
(45) Veröffentlichungstag und Bekanntmachung des Hinweises auf die Patenterteilung: **09.04.2008**
(21) Anmeldenummer: 01128088.0
(22) Anmeldetag: 27.11.2001
(51) Int. Cl.: B60H 1/32, B60H 1/00

(54) **Klimaanlage**
Air conditioning
Conditionneur d'air

(30) Priorität: 15.12.2000 DE 10062824
(43) Veröffentlichungstag der Anmeldung: 19.06.2002
(73) Patentinhaber: Obrist Engineering GmbH, 6890 Lustenau (AT); Bayerische Motoren Werke Aktiengesellschaft, 80788 München (DE)
(72) Erfinder: Schlenz, Dieter, 82288 Kottgeisering (DE); Knorr, Reinhard, 80995 München (DE); Mager, Robert, 81375 München (DE); Obrist, Frank, 6850 Dornbirn (AT); Graz, Martin, 6912 Hörbranz (AT)
(74) Vertreter: Quehl, Horst Max

(56) Entgegenhaltungen:
- DE-A- 19 540 566
- DE-A- 19 601 392
- DE-C- 3 836 049
- US-A- 6 059 027

## Beschreibung

Die Erfindung betrifft eine Klimaanlage mit den Merkmalen des Oberbegriffs des Patentanspruchs 1.

Bei Umschaltung einer Klimaanlage der genannten Art auf Heizbetrieb nach dem Wärmepumpenprinzip, z.B. bei neuer Inbetriebnahme des Fahrzeuges nach erheblichem Abfall der Aussentemperatur, wird der Klimatisierungswärmetauscher erhitzt, so dass an ihm vorhandene Feuchtigkeit verdampft und mit der Gebläseluft in den Fahrgastraum geführt wird. Dort kondensiert sie an den Fenstern des Fahrgastraumes und behindert folglich auf gefährdende Weise die Sicht des Fahrers. Ausserdem kann lang andauernde Feuchtigkeit am Klimatisierungswärmetauscher auf unhygienische Weise zu Pilzbildungen aufweisenden Verunreinigungen führen.

Um das Eindringen eines als unangenehm empfundenen Luftstromes hoher Feuchtigkeit in den Fahrgastraum zu verhindern, sind bei einer Klimaanlage der eingangs genannten Art durch der DE-A-3907201 drei verschiedenen Massnahmen bekannt. Bei einer dieser Massnahmen wird wahlweise nur einer von zwei parallel geschalteten Klimatisierungswärmetauschern verwendet, so dass beim Heizbetrieb keine Luft über den durch den Kühlbetrieb feuchten Klimatisierungswärmetauscher geführt wird. Entsprechend einer weiteren Massnahme wird ein Heizbetrieb des Klimatisierungswärmetauschers nur aufgrund des Signals eines Feuchtesensors ermöglicht. Eine dritte Massnahme betrifft die Inbetriebsetzung einer zusätzlichen Entfeuchtungsvorrichtung aufgrund eines Signals eines Feuchtesensors. Als Beispiel für eine solche Vorrichtung wird ein in den Luftführungskanal einschwenkbarer Aboder Adsorptionsfilter genannt. Die erste und dritte Massnahme sind konstruktiv aufwendig. Die zweite Massnahme hat den Nachteil, dass sie ohne die nachteilige, zusätzliche dritte Massnahme einen Heizbetrieb im Anschluss an einen Kühlbetrieb praktisch unmöglich macht.

Die DE-A-4023046 beschreibt eine nur für den Kühlbetrieb geeignete Klimaanlage, bei der nach Ausserbetriebnahme des Fahrzeuges ihr Gebläse eine fest vorgegebene Nachlaufzeit hat. Da die für den angestrebten Zweck aus dem Klimatisierungswärmetauscher effektiv abzuführende Menge an Kondensat unberücksichtigt bleibt, ist der betreffende, mit einer Geräuschentwicklung verbundene Energieaufwand entweder nicht erforderlich, zu hoch oder nicht ausreichend. Auch aufgrund der sich folglich im Fahrzeugraum ergebenden, erhöhten Luftfeuchtigkeit kann nicht sicher verhindert werden, dass bei späterer Inbetriebnahme des Fahrzeuges und erneutem Betrieb des Gebläses, Luft mit zu hoher Feuchtigkeit gegen eine kalte Windschutzscheibe geführt wird. Die dort auch beschriebenen konstruktiven Massnahmen, um die vom Gebläsestrom aufgenommene feuchte Luft an dem Fahrgastraum vorbei nach aussen abzuleiten, sind mit erhöhtem konstruktiven Aufwand verbunden und geben dennoch keine ausreichende Sicherheit gegen ein plötzliches Beschlagen der Fensterflächen des Fahrzeuges.

Die DE-B-19512356 beschreibt eine nur für den Kühlbetrieb ausgeführte Klimaanlage, bei der ein Beschlagen der Fahrzeugscheibe dadurch verhindert werden soll, dass beim Starten des Kühlbetriebs, in Abhängigkeit von Temperaturmessungen, das Gebläse erst später zugeschaltet wird als der Kompressor.

Die DE-A-198 35 448 befasst sich mit konstruktiven Massnahmen am Klimatisierungsgehäuse einer Klimaanlage, um kondensierendes Wasser so abfliessen zu lassen, dass es durch den Gebläsestrom nicht erneut mitgerissen wird.

Der Erfindung liegt die Aufgabe zugrunde eine Klimaanlage der eingangs genannten Art mit geringem konstruktiven Aufwand derart zu verbessern, dass ein plötzliches Beschlagen der Fahrzeugscheiben aufgrund eines Heizbetriebs nach dem Wärmepumpenprinzip sicher verhindert wird.

Die Lösung der Aufgabe der Erfindung erfolgt erfindungsgemäss aufgrund der kennzeichnenden Merkmale des Patentanspruchs 1.

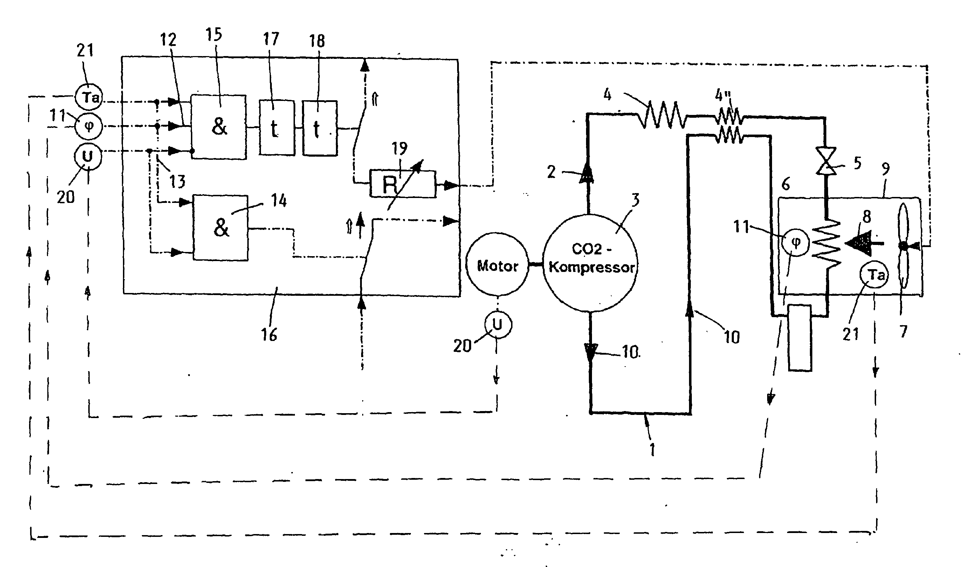

Ausführungsformen der Erfindung sind Gegenstand der abhängigen Patentansprüche und der folgenden Beschreibung an Hand der Zeichnung zu entnehmen.

Die Zeichnung zeigt eine vereinfachte Darstellung des Kanalsystems einer an sich bekannten Klimaanlage mit einer schematischen Darstellung von Funktionsbereichen einer zugehörigen Steuereinheit.

Im Kühlbetrieb wird das Kanalsystem 1 der Klimaanlage vom beispielsweise aus CO₂ bestehenden Wärmeträger in Richtung des Pfeiles 2 durchströmt und gibt die im Kompressor 3 erzeugte Wärmeenergie in Wärmetauschern 4 und 4" ab, bevor der Wärmeträger im Ventil 5 expandiert und stark abgekühlt den Klimatisierungswärmetauscher 6 durchströmt. In diesem steht es in Wärmeaustausch mit einem durch ein Gebläse 7 erzeugten, durch den Pfeil 8 angedeuteten Luftstrom, der zur Klimatisierung dem nichtdargestellten Fahrgastraum eines Fahrzeuges zugeführt wird. Die somit erfolgende Abkühlung der Luft führt zu deren Übersättigung und zu Ausscheidung von Wasser, das sich am Klimatisierungswärmeaustauscher 6 und in dem diesen einschliessenden Belüftungsgehäuse 9 sammelt und nur unvollständig aus diesem ausgebracht werden kann.

Im Heizbetrieb nach dem Wärmepumpenprinzip wird das Kanalsystem 1 nach Umschaltung von nichtdargestellten Dreiwegeventilen in entgegengesetzter Richtung entsprechend dem Pfeil 10 durchströmt, so dass im Kompressor 3 erzeugte Wärmeenergie ohne vorherige Abkühlung im Wärmetauscher 4 dem Klimatisierungs-wärmetauscher 6 zugeführt wird. Dies hat bei herkömmlichen Klimaanlagen dieser Art zur Folge, dass das dort vom vorherigen Kühlbetrieb vorhandene Wasser plötzlich in erheblicher Menge verdampft und mit dem vom Gebläse 7 erzeugten Luftstrom in den Fahrgastraum des Kraftfahrzeuges geführt wird. Je nach Einstellung der üblicherweise vorhandenen Luftleitflächen gelangt dabei ein Teil der somit einen hohen Wasseranteil aufweisenden warmen Luft auch zu den wesentlich kühleren Windschutzscheiben, so dass diese sofort stark beschlagen und somit undurchsichtig werden. Falls sich dabei das Fahrzeug bereits in Bewegung befindet, ist dies mit grosser Unfallgefahr verbunden.

Solche gefährlichen Betriebsbedingungen können z.B. auftreten, wenn das Fahrzeug an einem warmen Tag und folglich nach Benutzung im Kühlbetrieb abgestellt wurde und die erneute Benutzung des Fahrzeuges z.B. in der Nacht oder am nächsten Morgen erfolgt, nachdem sich die Aussenluft stark abgekühlt hat, so dass anschliessend der Heizbetrieb in Gang gesetzt wird.

Zur Vermeidung einer Gefährdung aufgrund solcher Betriebsweise ist an dem Klimatisierungswärmetauscher 6 bzw. im Belüftungsgehäuse 9 an geeigneter Stelle mindestens ein Nässesensor 11 vorgesehen, der über Signalleitungen 12,13 mit einem ersten und zweiten Funktionsbereich 14,15 einer Steuereinheit 16 verbunden ist. Als geeignete Stelle ist ein Bereich des betreffenden Gehäuses anzusehen, an dem sich Nässe aufgrund der Schwerkraft ansammelt.

Der erste Funktionsbereich 14 der Steuereinheit 16 ist dafür programmiert die Klimaanlage zu steuern und dabei zu verhindern, dass die Einschaltung ihres Heizbetriebes bei Nässe am Klimatisierungswärmetauscher erfolgt, während der zweite Funktionsbereich 15 dafür programmiert ist, bei abgeschaltetem Fahrzeugantrieb und damit abgeschaltetem Kompressor 3 das Gebläse 7 einzuschalten.

Die folglich durch das Belüftungsgehäuse 9 geblasene Luft nimmt dort die Nässe auf und gelangt anschliessend in den Fahrzeugraum, um von dort durch nachströmende Luft nach aussen verdrängt zu werden.

Mit dem zweiten Funktionsbereich 15 sind zwei Zeitglieder 17,18 verbunden, von denen das eine die maximale Laufzeit des Gebläses 7 auf z.B. 5 Minuten begrenzt und das andere nach Beendigung des Nässesignals eine Nachlaufzeit von z.B. einer Minute bestimmt, um die zuvor geförderte feuchte Luft aus dem Fahrgastraum nach aussen zu verdrängen. Ein Widerstandsregler 19 ermöglicht eine Voreinstellung der Leistung des Gebläses 7.

Neben dem Signal von dem Nässesensor 11 erhält der zweite Funktionsbereich 15 der Steuereinheit 16 ein Signal von einem Sensor 20 für den Betriebszustand des Fahrzeugantriebes, um das Gebläse 7 bei signalisierter Nässe nur bei abgeschaltetem Fahrzeugantrieb zuzuschalten.

Da weiterhin eine Benutzung des Heizbetriebs bzw. Wärmepumpenbetriebs der Klimaanlage aufgrund des ohnehin zum Heizen vorhandenen üblichen Kühlwasserwärmetauschers nur für die schnelle Aufheizung des Fahrgastraumes aus besonders niedrigen Temperaturen erforderlich ist, wird zweckmässig die Umschaltung der Klimaanlage auf Heiz- bzw. Wärmepumpenbetrieb verhindert, wenn die Aussentemperatur oberhalb eines vorgegebenen Wertes von z.B. 20° C liegt. Dies erfolgt dann aufgrund des Signals eines Temperaturgebers 21 für die Aussentemperatur. Die Vorgabe der betreffenden Aussentemperatur ist vorzugweise zur Anpassung an besondere Klimazonen mit starken Temperaturschwankungen z.B. durch die jeweilige Vertragswerkstatt des Fahrzeugs einstellbar.

Weiterhin kann das Trocknen des Klimatisierungswärmetauschers 6 durch Einschalten des Gebläses unabhängig von einer zu erwartenden Einschaltung des Heizbetriebes der Klimaanlage auch nach einem Zeitprogramm ausgeführt werden, um eine mögliche Pilzbildung im Belüftungsgehäuse 9 zu verhindern.

Für die konkrete Ausführung eines Nässesensors wird auf die Literatur verwiesen, beispielsweise auch die Literatur betreffend Leckageanzeigen oder betreffend Regensensoren nach dem Prinzip einer Änderung des elektrischen Widerstandes bei Anwesenheit von Feuchtigkeit. Zu Letzterem findet sich ein Beispiel in der DE-A-19757913.

Anstatt eines durch die eingangs genannte Literatur bekannten, auf die Luftfeuchtigkeit ansprechenden Feuchtesensors ist jedoch ein Nässesensor vorzusehen, so dass nicht eine Zuschaltung des Heizbetriebs bereits aufgrund einer Luftfeuchtigkeit verhindert wird, die im Heizbetrieb nahezu verzögerungsfrei beseitigt werden könnte.

## Patentansprüche

1. Klimaanlage zum Kühlen und Heizen eines Fahrzeuges, mit einem Kanalsystem (1), das zumindest einen Kompressor (3), ein Expansionsventil (5) und mehrere Wärmeaustauscher (4,4",6) aufweist, für die umschaltbare Zirkulation eines Wärmeträgers in zwei einander entgegengesetzten Richtungen, wobei einer der Wärmetauscher ein mit einem Gebläse (7) zusammenwirkender und in einem Belüftungsgehäuse (9) angeordneter Klimatisierungswärmetauscher (6) ist und zur Einstellung der Leistung der Klimaanlage einschliesslich der Umschaltung zwischen Heiz- und Kühlbetrieb eine programmierbare Steuereinheit (16) vorgesehen ist, **dadurch gekennzeichnet, dass** die Steuereinheit (16) mit mindestens einem am Klimatisierungswärmetauscher (6) angeordneten Nässesensor (11) verbunden ist und so programmiert ist, dass ihre Einschaltfunktion für den Heizbetrieb der Klimaanlage aufgrund eines Nässe anzeigenden Signals des Nässesensors (11) blockiert wird, wobei die Steuereinheit (16) einen ersten Funktionsbereich (14) für den Betrieb der Klimaanlage einschliesslich der Funktion zum Blockieren des Heizbetriebs aufweist sowie einen zweiten Funktionsbereich (15) für den Betrieb des Gebläses (7), wobei der Nässesensor (11) mit beiden Funktionsbereichen (14,15) verbunden ist, zum Einschalten des Gebläses (7) aufgrund eines Nässe anzeigenden Signals des Nässesensors (11) und aufgrund eines Signals eines Sensors (20) betreffend den Betriebszustand des Fahrzeugantriebs, so dass dieses Einschalten des Gebläses (7) bei einem Nässe anzeigenden Signal des Nässesensors nur bei ausgeschaltetem Fahrzeugantrieb erfolgt.

2. Klimaanlage nach Anspruch 1, **dadurch gekennzeichnet, dass** beide Funktionsbereiche (14,15) zusätzlich zu der Verbindung mit einem Nässesensor (11) funktionell mit Signalgebern (21,20) für die Aussentemperatur und den Status des Fahrzeugantriebs verbunden sind, so dass der zweite Funktionsbereich (15) das Gebläse (7) nur unterhalb eines vorgegebenen Temperaturwertes und bei Stillstand des Fahrzeugmotors einschaltet.

3. Klimaanlage nach Anspruch 2, **dadurch gekennzeichnet, dass** der erste Funktionsbereich (14) programmiert ist, ein Ein- oder Umschalten der Strömungsrichtung im Kanalsystem (1) auf Heizbetrieb zu verhindern, wenn der Aussentemperatursignalgeber (21) ein Signal liefert, das einem Aussentemperaturwert oberhalb eines vorgegebenen Grenzwertes entspricht.

4. Klimaanlage nach Anspruch 1 oder 2, **dadurch gekennzeichnet, dass** der zweite Funktionsbereich (15) mit einem Zeitprogrammschalter verbunden ist, so dass das Gebläse (7) aufgrund eines Signals des Nässesensors (11) und des Zeitprogrammschalters eingeschaltet wird.

5. Klimaanlage nach einem der Ansprüche 1 bis 4, **dadurch gekennzeichnet, dass** der mindestens eine Nässesensor (11) an der tiefsten Stelle eines am Klimatisierungswärmetauscher (6) vorgesehenen, luftdurchströmten Gehäuses (9) angeordnet ist.

## Claims

1. Air conditioner for the cooling and heating of a vehicle with a channel system (I), which has at least one compressor (3), one expansion valve (5) and several heat exchangers (4, 4", 6) for the circulation of a heat carrier, which can be changed over to two opposite directions, in which one of the heat exchanger is an air-conditioning heat exchanger (6) working together with a blower (7) and arranged in a ventilation housing (9), and a programmable control unit (16) is provided for the setting of the output of the air conditioner including the changeover between heating and cooling operation, **characterized in that** the control unit (16) is connected to at least one humidity sensor (11) arranged at the air-conditioning heat exchanger (6) and is programmed in such a way that its switching-on function for the heating operation of the air conditioner is blocked based on a humidity-showing signal of the humidity sensor (11), in which the control unit (16) has a first functional area (14) for the operation of air conditioner including the function for blocking the heating operation and a second functional area (15) for the operation of the blower (7), in which the humidity sensor (11) is connected to both functional areas (14,15) for the switching-on of the blower (7) based on a humidity-showing signal of the humidity sensor (11) and based on a signal of a sensor (20) concerning the operating status of the vehicle drive so that this switching-on of the blower (7) by a humidity-showing signal of the humidity sensor occurs only for switched-off vehicle drive.

2. Air conditioner according to claim 1, **characterized in that** both the functional areas (14,15), in addition to the connection to a humidity sensor (11), are connected functionally to signal transmitters (21, 20) for the outside temperature and the status of the vehicle drive so that the second functional area (15) of the blower (7) switches on only below a specified temperature value and for idle condition of the vehicle engine.

3. Air conditioner according to claim 2, **characterized in that** the first functional area (14) is programmed to prevent a switching on or changeover of the flow direction in the channel system (I) to heating operation, if the outside temperature signal transmitter (21) sends a signal, which corresponds to an outside temperature value above a specified limiting value.

4. Air conditioner according to claim 1 or 2, **characterized in that** the second functional area (15) is connected to a timer switch so that the blower (7) is switched on based on a signal of the humidity sensor (11) and the timer switch.

5. Air conditioner according to claims 1 to 4, **characterized in that** a minimum of one humidity sensor (11) is arranged at the deepest location of the air flow housing (9) provided at the air-conditioning heat exchanger (6).

## Revendications

1. Installation de climatisation pour refroidir et chauffer un véhicule, comprenant un système de conduits (1) qui présente au moins un compresseur (3), une soupape d'expansion (5) et plusieurs échangeurs thermiques (4, 4", 6), pour la circulation commutable d'un caloporteur dans deux directions opposées l'une à l'autre, dans laquelle un des échangeurs thermique est un échangeur thermique de climatisation (6) agissant en interaction avec une soufflante (7) et étant agencé dans un boîtier de ventilation (9) et dans laquelle une unité de commande programmable (16) est prévue pour ajuster la puissance de l'installation de climatisation, y compris la commutation entre le mode de chauffage et le mode de refroidissement, **caractérisée en ce que** l'unité de commande (16) est reliée à au moins un capteur d'humidité (11) agencé sur l'échangeur thermique de climatisation (6) et est programmée de telle sorte que sa fonction d'enclenchement pour le mode de chauffage de l'installation de climatisation est bloquée en raison d'un signal du capteur d'humidité (11), indiquant de l'humidité, sachant que l'unité de commande (16) présente une première zone de fonction (14) pour le fonctionnement de l'installation de climatisation, y compris la fonction pour bloquer le mode de chauffage ainsi qu'une seconde zone de fonction (15) pour le fonctionnement de la soufflante (7), sachant que le capteur d'humidité (11) est relié aux deux zones de fonction (14, 15), pour l'enclenchement de la soufflante (7) en raison d'un signal du capteur d'humidité (11), indiquant de l'humidité, et en raison d'un signal d'un capteur (20) concernant l'état de service de l'entraînement du véhicule de telle sorte que cet enclenchement de la soufflante (7) a lieu en cas d'un signal du capteur d'humidité (11), indiquant de l'humidité, uniquement lorsque l'entraînement du véhicule est hors circuit.

2. Installation de climatisation selon la revendication 1, **caractérisée en ce que**, en supplément à la liaison avec un capteur d'humidité (11), les deux zones de fonction (14, 15) sont reliées sur le plan fonctionnel à des transmetteurs de signaux (21, 20) pour la température extérieure et pour l'état de l'entraînement du véhicule de telle sorte que la seconde zone de fonction (15) enclenche la soufflante (7) seulement en dessous d'une valeur de température prescrite et en cas d'un arrêt du moteur du véhicule.

3. Installation de climatisation selon la revendication 2, **caractérisée en ce que** la première zone de fonction (14) est programmée pour empêcher un enclenchement ou une commutation du sens d'écoulement dans le système de conduits (1) sur le mode de chauffage lorsque le transmetteur du signal de la température extérieure (21) livre un signal qui correspond à une valeur de température extérieure au-dessus d'une valeur limite prescrite.

4. Installation de climatisation selon l'une ou l'autre des revendications 1 et 2, **caractérisée en ce que** la seconde zone de fonction (15) est reliée à un commutateur à programmation horaire de telle sorte que la soufflante (7) est enclenchée en raison d'un signal du capteur d'humidité (11) ainsi que du commutateur à programmation horaire.

5. Installation de climatisation selon l'une des revendications 1 à 4, **caractérisée en ce que** le au moins un capteur d'humidité (11) est agencé à l'endroit le plus profond d'un carter (9) prévu sur l'échangeur thermique de climatisation (6) et traversé par de l'air.
